(19) Europäisches Patentamt
European Patent Office
Office européen des brevets

(11) **EP 2 945 910 B1**

(12) **FASCICULE DE BREVET EUROPEEN**

(45) Date de publication et mention
de la délivrance du brevet:
**13.03.2019 Bulletin 2019/11**

(21) Numéro de dépôt: **14703436.7**

(22) Date de dépôt: **16.01.2014**

(51) Int Cl.:
***C02F 1/20*** *(2006.01)*

(86) Numéro de dépôt international:
**PCT/IB2014/058336**

(87) Numéro de publication internationale:
**WO 2014/111880 (24.07.2014 Gazette 2014/30)**

(54) **DISPOSITIF DE TRAITEMENT DE LIQUIDE**

FLÜSSIGKEITSBEHANDLUNGSVORRICHTUNG

LIQUID TREATMENT DEVICE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **21.01.2013 FR 1350513**

(43) Date de publication de la demande:
**25.11.2015 Bulletin 2015/48**

(73) Titulaire: **ISB Water**
**92000 Nanterre (FR)**

(72) Inventeurs:
• **PROFIT, Grégoire**
**F-92310 Sevres (FR)**
• **PROFIT, Alexandre**
**F-92190 Meudon (FR)**

(74) Mandataire: **Nony**
**11 rue Saint-Georges**
**75009 Paris (FR)**

(56) Documents cités:
**FR-A1- 2 950 047**

**EP 2 945 910 B1**

## Description

### Domaine technique

L'invention concerne un dispositif de traitement d'un liquide contenant un gaz dissous, en particulier pour traiter un liquide ayant transité dans un échangeur de chaleur, une tour de réfrigération, un bassin, notamment une piscine publique ou privée, un circuit de refroidissement ou de climatisation, un circuit de chauffage, un circuit de filtration, un circuit de déminéralisation par osmose inverse, un circuit d'eau chaude sanitaire, ou un circuit de distribution d'eau potable. De manière générale, l'invention concerne un dispositif de traitement d'un liquide aqueux contenant un gaz dissous d'un circuit de processus industriel, avec une eau chargée ou non, par exemple une eau grise ou un lixiviat.

### Etat de la technique

Dans ces applications, la présence de certaines substances (solides, liquides, ou gazeuses) ou de microorganismes conduit à des phénomènes indésirables d'embouage et/ou d'entartrage et/ou de corrosion et/ou de colmatage. Le liquide doit donc être traité périodiquement par injection d'additifs, par exemple par injection de désinfectants, de floculants, d'acides ou de séquestrants, voire être vidangé et remplacé périodiquement. Ces traitements sont coûteux et souvent nuisibles à l'environnement.

Il existe donc un besoin pour une nouvelle solution de traitement permettant de résoudre, au moins partiellement, ces problèmes.

### Résumé de l'invention

Selon l'invention, on atteint ce but au moyen d'un dispositif de traitement d'un liquide contenant un gaz dissous selon la revendication 1.

Comme on le verra plus en détail dans la suite de la description, un tel dispositif permet, de manière simple et efficace, de traiter le liquide avec une consommation réduite d'additifs, voire sans utilisation d'additifs, et/ou de limiter le taux de renouvellement dudit liquide. Sans être liés par une théorie, les inventeurs expliquent ce résultat de la manière suivante : le réacteur hydrodynamique permet, par une détente brutale, de faire s'évaporer, par cavitation, une partie des gaz dissous dans le liquide, tandis que le séparateur de gaz piège les bulles de gaz ainsi formées avant que ce gaz ne se dissolve à nouveau dans le liquide par compression en aval. La tension de gaz dans le liquide (c'est-à-dire la concentration en gaz dissous) sortant du dispositif est donc inférieure à celle dans le liquide entrant dans le dispositif.

Le dispositif permet ainsi de réduire la tension du gaz dissous, et donc de diminuer son pouvoir de nuisance.

La cavitation est un phénomène bien connu et qui est généralement redouté parce qu'il modifie considérablement la structure et les propriétés des écoulements de liquide. C'est le mérite de l'inventeur d'avoir imaginé un dispositif qui utilise avantageusement ce phénomène.

Ce dégazage en aval du réacteur hydrodynamique permet en particulier d'éliminer du $CO_2$ et/ou de l'$O_2$, créant ainsi, au sein dudit liquide, de nouvelles conditions pour les équilibres physico-chimiques, tels que l'équilibre calco-carbonique, par exemple.

Ce dégazage aval permet aussi d'éliminer des gaz indésirables, tels que les chloramines, et en particulier les tri-chloramines, qui sont très néfastes pour la santé, et qui peuvent apparaître lors du traitement des eaux des piscines.

Un dispositif selon l'invention peut encore comporter une ou plusieurs des caractéristiques optionnelles suivantes :

- le séparateur de gaz est conformé de manière que, dans ledit séparateur de gaz, le liquide est maintenu sous pression, et en particulier n'est pas exposé à l'atmosphère, comme dans un bassin ; et/ou le liquide n'est pas mis en contact avec un gaz extérieur (c'est-à-dire que seul le gaz avec lequel le liquide est en contact est celui des bulles extraites par cavitation) (notamment, le liquide n'est pas disposé dans un réservoir de manière que sa surface libre soit en contact avec l'atmosphère) ;
- le séparateur de gaz est un séparateur à coalescence ou un filtre à brosse ;
- le réacteur hydrodynamique comporte un matériau diélectrique susceptible d'entrer en contact avec le liquide ;
- le réacteur hydrodynamique comporte des premiers canaux délimités au moins en partie, voire totalement par un matériau diélectrique ;
- le réacteur hydrodynamique comporte, de préférence en aval du matériau diélectrique, des moyens de séparation de particules en suspension, en particulier des moyens de décantation et/ou un filtre ;
- le filtre est choisi dans le groupe formé par un filtre à brosse, un filtre à disques, un filtre à média granulaire, une membrane d'ultrafiltration, en particulier en fibres creuses, une membrane de nanofiltration, notamment seule ou en aval d'une membrane d'ultrafiltration, ou une membrane par osmose inverse ;
- le réacteur hydrodynamique comporte des premiers canaux, de préférence délimités intérieurement par un matériau diélectrique, qui débouchent an aval dans une chambre de compression, le passage du liquide dans les premiers canaux provoquant son accélération et la génération de bulles de cavitation, avant qu'il ne soit injecté dans la chambre de compression, le passage du liquide dans la chambre de compression provoquant l'implosion de la majorité des bulles de cavitation ;
- le réacteur hydrodynamique comporte des deuxièmes canaux, de préférence délimités intérieurement par un matériau conducteur électriquement, de préférence par du zinc, qui débouchent en amont dans la chambre de compression, le passage du liquide dans les deuxième canaux provoquant son accélération et la génération de bulles de cavitation ; De préférence, le réacteur hydrodynamique comporte une deuxième chambre de compression dans laquelle débouchent, en aval, les deuxièmes canaux, de façon à faire imploser une majorité des bulles de cavitation générées dans les deuxièmes canaux ;

- le réacteur hydrodynamique comporte un premier bloc comportant une pluralité de dits premiers canaux, une chambre de compression, et de préférence un deuxième bloc comportant une pluralité de dits deuxièmes canaux, les premiers canaux, et le cas échéant les deuxième canaux, débouchant dans ladite chambre de compression de sorte qu'un liquide entrant dans le réacteur hydrodynamique traverse successivement les premiers canaux, la chambre de compression et les deuxièmes canaux ;

- de préférence les premiers canaux sont délimités par une paroi intérieure en un matériau diélectrique, de préférence un plastique, de préférence en polytétrafluoroéthylène (PTFE) ;

- de préférence les deuxième canaux sont délimités par une paroi intérieure en un matériau conducteur électriquement apte à servir d'anode sacrificielle afin de protéger le circuit dans lequel circule le liquide à traiter ;

- de préférence les premier et deuxième blocs sont insérés dans un boîtier présentant une entrée et une sortie, tout le liquide entrant dans le boîtier devant traverser les premiers canaux, la chambre de compression et les deuxièmes canaux avant de sortir du boîtier ;

- de préférence le boîtier est en contact électrique avec ledit matériau conducteur électriquement ;

- plus de 50% en nombre des bulles générées dans le réacteur hydrodynamique présentent un diamètre compris entre 0,2 $\mu$m et 5 mm, de préférence compris entre 0,2 $\mu$m et 2 mm ;

- le réacteur hydrodynamique est un réacteur hydrodynamique décrit dans le brevet EP-B2-680 457 ;

- un liquide circule dans le réacteur hydrodynamique, ce liquide contenant de préférence au moins un composé contenant un élément choisi dans le groupe formé par le chlore, l'aluminium, le brome, le chrome ou le strontium, en particulier un métal radioactif.

L'invention concerne également une installation comportant, voire constituée par un circuit dans lequel est inséré une cible et un dispositif de traitement d'un liquide sortant de ladite cible, le dispositif de traitement étant conforme à l'invention et le séparateur de gaz étant inséré en aval dudit réacteur hydrodynamique, à une distance inférieure à 1 mètre du réacteur hydrodynamique.

La cible peut en particulier être choisie dans le groupe formé par un échangeur de chaleur, une tour de réfrigération, un bassin, en particulier à l'air libre, notamment une piscine publique ou privée, un circuit de refroidissement ou de climatisation, un circuit de chauffage, un circuit de filtration, un circuit de déminéralisation par osmose inverse, un circuit d'eau chaude sanitaire, ou un circuit de distribution d'eau potable.

Dans un mode de réalisation, le liquide circule en boucle fermée dans l'installation.

De préférence, le liquide est maintenu sous pression et/ou sans contact avec l'atmosphère, sauf dans la cible éventuellement. De préférence la pression est supérieure à la pression atmosphérique en tout point du circuit, sauf dans la cible éventuellement.

L'invention concerne enfin un procédé de traitement d'un liquide contenant des gaz dissous, ledit procédé consistant à faire passer ledit liquide à travers un dispositif selon l'invention dans des conditions thermodynamiques adaptées pour que le réacteur hydrodynamique génère des bulles.

## Définitions

Les positions « amont » et « aval » sont déterminées par rapport au sens d'écoulement du liquide lors de son traitement.

Par « comportant un », il y a lieu de comprendre « comportant au moins un », sauf indication contraire.

Les expressions « en particulier » ou « notamment » sont synonymes et ne sont pas limitatives.

On appelle « diamètre équivalent » d'une section d'aire A le diamètre d'une section circulaire d'aire identique A. Pour une section circulaire, le diamètre équivalent est donc égal au diamètre.

On appelle « plan transversal » un plan perpendiculaire à la direction principale d'écoulement du liquide.

## Brève description des figures

D'autres caractéristiques et avantages de l'invention apparaitront encore à la lecture de la description détaillée qui va suivre et à l'examen du dessin annexé, fournis à des fins illustratives et non limitatives. Dans ce dessin,

- la figure 1 représente schématiquement une installation selon l'invention ;

- la figure 2 représente en coupe longitudinale un exemple de réacteur hydrodynamique pouvant être utilisé dans un dispositif selon l'invention ;

- la figure 3 représente un exemple de séparateur de gaz à coalescence ;

- la figure 4 illustre les phénomènes de cavitation et d'implosion des bulles de cavitation.

Dans les différentes figures, des organes identiques ou analogues ont été repérés avec les mêmes références.

## Description détaillée

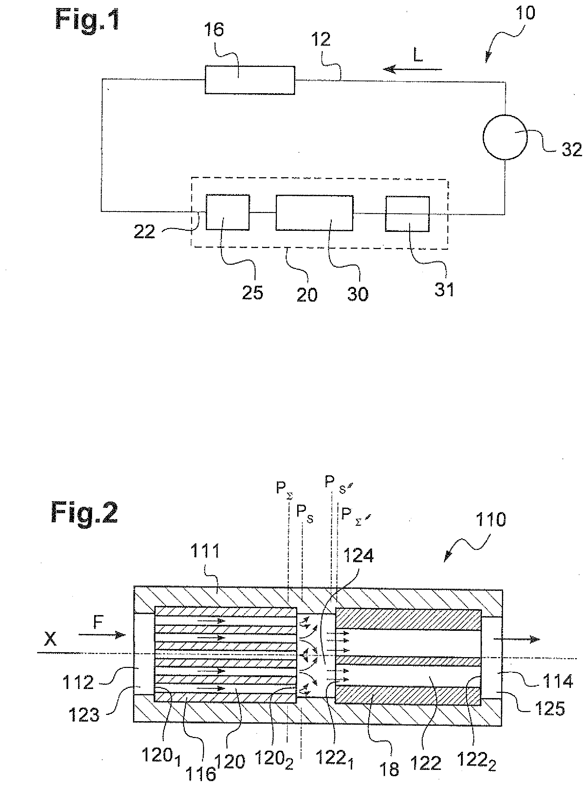

La figure 1 représente une installation 10 selon l'invention comportant un circuit 12 fermé dans lequel circule un liquide L. Une cible, en l'occurrence un radiateur 16, et un dispositif de traitement 20 selon l'invention sont insérés dans le circuit 12, le dispositif de traitement 20 étant en amont de la cible.

Le dispositif de traitement 20 comporte une conduite 22 dans laquelle sont insérées, depuis l'amont vers l'aval (l'amont et l'aval étant déterminés par le sens de circulation du liquide dans la conduite 22), un réacteur hydrodynamique 25, un séparateur de gaz 30 et un filtre 31. L'installation 10 comporte également une pompe 32, insérée en amont ou en aval du dispositif de traitement 20, permettant de mettre en circulation le liquide L.

Le circuit 12 peut être ouvert, semi-ouvert, ou fermé, comme représenté, avec ou sans appoint de liquide, avec ou sans mise en contact du liquide avec l'atmosphère.

L'installation 10 n'est pas limitée et peut être notamment une installation d'eau froide générale, d'eau chaude sanitaire, d'eau de chauffage, d'eau de climatisation, d'eau de refroidissement, d'eau potable, d'eau industrielle, d'eau d'arrosage ou/et d'irrigation, d'eau de protection incendie, d'eau de piscine ou de bassin de baignade et de rééducation. Cette installation peut être dans un bâtiment résidentiel ou tertiaire, par exemple un hôpital ou une école.

### Réacteur hydrodynamique

Tout dispositif capable de produire une chute brutale de la pression dans le liquide afin de créer, par cavitation, des bulles, en particulier des microbulles, peut être utilisé comme réacteur hydrodynamique 25.

Le réacteur hydrodynamique comporte une portion dans laquelle la section de passage est moins élevée que celle de la conduite dans laquelle le réacteur hydrodynamique est inséré. De préférence, le réacteur hydrodynamique comporte au moins deux telles portions.

Une simple détente du liquide par réduction de sa section de passage ne suffit cependant pas à créer de la cavitation si l'écoulement reste laminaire. La détente doit donc être brutale afin de créer une forte turbulence et des gradients de pression localement très élevés.

De préférence, le réacteur hydrodynamique est passif, c'est-à-dire ne comporte pas de consommateur énergétique, et en particulier un moteur. De préférence encore, le réacteur hydrodynamique ne comporte pas de pièce mobile.

Le réacteur hydrodynamique peut en particulier comporter une zone d'accélération constituée d'un ou plusieurs premiers canaux débouchant en amont dans une chambre amont, le liquide accélérant entre la chambre amont et les premiers canaux.

De préférence, le rapport S"/Σ" peut être supérieur à 2, supérieur à 5, supérieur à 10, supérieur à 20, supérieur à 50, supérieur à 100, voire supérieur à 200 et/ou inférieur à 1000, inférieur à 500, inférieur à 400, voire inférieur à 300,

- S" désignant la section de la chambre amont mesurée dans un plan transversal immédiatement en amont de la région dans laquelle les premiers canaux débouchent dans la chambre amont ;
- Σ" désignant la somme des sections transversales desdits premiers canaux mesurées dans un plan transversal immédiatement en aval de la région dans laquelle ils débouchent dans la chambre amont.

Les premiers canaux peuvent présenter une section longitudinale convergente, par exemple en forme de tuyère, de manière à accélérer progressivement l'écoulement.

Les premiers canaux sont de préférence parallèles les uns aux autres. Ils peuvent être rectilignes ou non. En particulier, ils peuvent s'étendre suivant la direction de l'écoulement du liquide. Le nombre de premiers canaux est de préférence supérieur à 3, supérieur à 5, supérieur à 10, supérieur à 20, supérieur à 30 et/ou inférieur à 200, inférieur à 150, inférieur à 100, inférieur à 80, inférieur à 60. La section transversale des canaux peut être quelconque, par exemple circulaire. Dans un mode de réalisation, les premiers canaux présentent une section transversale sensiblement constante sur toute leur longueur.

Le diamètre intérieur équivalent des premiers canaux est de préférence supérieur à 2 mm, supérieur à 10 mm, voire supérieur à 15 mm ou supérieur à 20 mm et/ou inférieur à 50 mm, inférieur à 40 mm, inférieur à 35 mm. Un diamètre intérieur équivalent d'environ 30 mm est bien adapté.

La longueur des premiers canaux est de préférence supérieure à 20 mm, supérieure à 30 mm et/ou inférieure à 50 mm, inférieure à 40 mm.

Bien entendu, le réacteur hydrodynamique peut être adapté pour provoquer une cavitation génératrice de bulles de différents gaz dissous.

De préférence, le réacteur hydrodynamique est configuré pour ne générer que des bulles microscopiques.

Dans un mode de réalisation, le dispositif de traitement comporte un réchauffeur, inséré en amont des premiers canaux, capable d'augmenter la température du liquide entrant dans ces derniers afin d'en améliorer l'efficacité. Chauffer le liquide est cependant généralement coûteux.

Dans un mode de réalisation préféré, le liquide sortant des premiers canaux entre dans une chambre de compression. Comme on le verra plus en détail dans la suite de la description, la chambre de compression contribue à l'implosion des bulles de cavitation et à la création de réactions avantageuses.

De préférence, la longueur de la chambre de compression, mesurée selon la direction de l'écoulement, et dans le système de coordonnées réduites d'EULER, est supérieure à $0,5*L_1$ et/ou inférieure à $2*0,5*L_1$, $L_1$ étant la longueur desdits premiers canaux relatifs à la chambre de compression concernée.

De préférence, la chambre de compression présente un volume supérieur à $0,0001$ dm$^3$, supérieur à $0,001$ dm$^3$, supérieur $0,01$ dm$^3$, supérieur à $0,1$ dm$^3$ et/ou inférieur à $20$ dm$^3$, inférieur à $10$ dm$^3$, inférieur à $1$ dm$^3$.

Le rapport $S/\Sigma$ peut être supérieur à 2, supérieur à 5, supérieur à 10, supérieur à 20, supérieur à 50, supérieur à 100, voire supérieur à 200 et/ou inférieur à 1000, inférieur à 500, inférieur à 400, voire inférieur à 300,

- S désignant la section de la chambre de compression mesurée dans un plan transversal immédiatement en aval de la région dans laquelle les premiers canaux débouchent dans la chambre de compression ;
- $\Sigma$ désignant la somme des sections transversales desdits premiers canaux mesurées dans un plan transversal immédiatement en amont de la région dans laquelle ils débouchent dans la chambre de compression.

Un rapport de $S/\Sigma$ élevé permet avantageusement la création de micro-jets à l'embouchure des premiers canaux, très efficaces pour générer de la cavitation.

Pour calculer le rapport $S/\Sigma$, on prend en considération tous les premiers canaux concernés.

Si le dispositif comporte plusieurs zones d'accélération dans lesquelles se produit de la cavitation, il comporte de préférence des chambres de compression respectives, en aval de chacune de ces zones d'accélération. Toutes les chambres de compression peuvent présenter un rapport $S/\Sigma$ sensiblement identique.

De préférence, le réacteur hydrodynamique comporte un matériau diélectrique disposé pour être en contact avec le liquide, de préférence dans une région où le liquide circule à vitesse élevée. De préférence, lesdits premiers canaux sont délimités par une paroi intérieure en un tel matériau diélectrique. Les premiers canaux peuvent être ménagés dans un bloc en ledit matériau diélectrique.

Le matériau diélectrique est de préférence un plastique, par exemple du polytétrafluoroéthylène (PTFE), du nylon, du polypropylène, du polychlorure de vinyle (PVC) ou un mélange de ces matériaux. D'autres matériaux diélectriques, par exemple céramiques, peuvent également être utilisés dans la mesure où ils permettent, par la circulation du liquide, de générer une charge électrique statique par tribo-électrisation.

Le PTFE est le matériau diélectrique préféré. Ce matériau diélectrique évite en effet à la matière solide du liquide d'adhérer à la surface du matériau diélectrique.

Le réacteur hydrodynamique comporte de préférence une partie en un matériau conducteur électriquement, disposée le long du trajet du liquide de manière à créer, par effet galvanique, des phénomènes d'oxydoréduction.

De préférence encore, le matériau conducteur électriquement est du zinc.

Le réacteur hydrodynamique peut en particulier comporter une pluralité de deuxièmes canaux délimités par une paroi intérieure en ledit matériau conducteur électriquement. Les deuxièmes canaux peuvent être ménagés dans un bloc en ledit matériau conducteur électriquement. Dans un mode de réalisation, la chambre de compression est disposée, le long du trajet du liquide, entre les premiers canaux et les deuxièmes canaux, ou réciproquement, entre les deuxièmes canaux et les premiers canaux.

Les deuxièmes canaux, comme les premiers canaux, peuvent être à l'origine de bulles de cavitation. Ils peuvent être parallèles les uns aux autres. Ils peuvent être rectilignes ou non. En particulier, ils peuvent s'étendre suivant l'axe longitudinal du réacteur hydrodynamique. Le nombre de deuxièmes canaux est de préférence supérieur à 2, supérieur à 3, supérieur à 5, supérieur à 10, supérieur à 20, supérieur à 30 et/ou inférieur à 100, inférieur à 80, inférieur à 60. La section transversale des deuxièmes canaux peut être quelconque, par exemple circulaire. Dans un mode de réalisation, les deuxièmes canaux présentent une section transversale sensiblement constante sur toute leur longueur.

Le diamètre intérieur équivalent des deuxièmes canaux est de préférence supérieur à 2 mm, supérieur à 4 mm, voire supérieur à 5 mm et/ou inférieur à 15 mm, inférieur à 13 mm, inférieur à 10 mm, inférieur à 8 mm, voire inférieur à 7 mm.

Dans un mode de réalisation, le diamètre intérieur équivalent des deuxièmes canaux est supérieur, voire 1,1, 1,5, 2, ou 3 fois supérieur à celui des premiers canaux.

La longueur des deuxièmes canaux est de préférence supérieure à 20 mm, supérieure à 30 mm et/ou inférieure à 50 mm, inférieure à 40 mm.

La chambre de compression est de préférence commune à plusieurs premiers et/ou deuxièmes canaux, voire commune à l'ensemble des premiers et/ou deuxièmes canaux. De préférence, les premiers canaux ne débouchent pas en regard des deuxièmes canaux, ce qui interdit au liquide sortant d'un premier canal et ayant traversé la chambre de compression d'entrer dans un deuxième canal en suivant un chemin rectiligne.

Les premiers canaux, optionnellement les deuxièmes canaux, et la chambre de compression, sont regroupés au sein du réacteur hydrodynamique.

Le réacteur hydrodynamique peut comporter un boîtier comportant une entrée et une sortie pour le liquide.

Le boîtier peut comporter un corps, de préférence cylindrique, et un ou plusieurs chapeaux d'extrémité, par exemple vissés sur le corps. Les chapeaux d'extrémité peuvent en particulier définir les entrée et sortie du réacteur hydrodynamique. La longueur d'un chapeau d'extrémité n'est pas limitée.

De préférence, le réacteur hydrodynamique comporte des raccords permettant la connexion de l'entrée et/ou de la sortie à une canalisation, par exemple une bride pourvue de trous à boulons apte à coopérer avec une bride correspondante de ladite canalisation, ou une partie mâle ou femelle à visser sur une partie femelle ou mâle, respectivement, de ladite canalisation. Les raccords peuvent être solidaires des chapeaux d'extrémité éventuels.

Le boitier, et en particulier un ou plusieurs chapeaux d'extrémité, peut être en un matériau conducteur électriquement, en particulier en acier.

A ses extrémités longitudinales, le premier bloc est délimité par une face amont et une face aval, au moins une desdites faces amont et aval étant de préférence concave.

Le premier bloc peut en particulier être constitué en ledit matériau diélectrique.

Le boîtier peut contenir un premier bloc définissant une pluralité de premiers canaux délimités latéralement, au moins partiellement, par une paroi en un matériau diélectrique, et débouchant, du côté de la sortie, dans une chambre de compression, lesdits premiers canaux étant agencés de manière que le liquide traverse le réacteur hydrodynamique depuis l'entrée jusqu'à la sortie en traversant au moins un premier canal et la chambre de compression.

Le boîtier peut encore contenir un deuxième bloc définissant une pluralité de deuxièmes canaux délimités latéralement, au moins partiellement, par une paroi en un matériau conducteur électriquement. Le deuxième bloc peut en particulier être constitué en ledit matériau conducteur électriquement.

A ses extrémités longitudinales, le deuxième bloc est délimité par une face amont et une face aval, au moins une desdites faces amont et aval étant de préférence concave.

Le deuxième bloc peut être disposé en amont ou en aval du premier bloc, pourvu que soit ménagée une chambre de compression à l'intérieur dudit boîtier. La chambre de compression peut en particulier être disposée entre les premier et deuxième blocs ou en aval du bloc le plus en aval dans le boîtier. Dans le mode de réalisation préféré, les premier et deuxième blocs sont agencés de manière que le liquide traverse successivement les premiers canaux, une chambre de compression dans laquelle débouchent tous les premiers et deuxièmes canaux, puis les deuxièmes canaux.

Les ouvertures par lesquelles les premiers et/ou les deuxièmes canaux débouchent, en particulier dans la chambre de compression, sont de préférence vives de façon à promouvoir un écoulement turbulent.

Les premiers et deuxièmes canaux des premier et deuxième blocs peuvent présenter une ou plusieurs des caractéristiques optionnelles des premiers et deuxièmes canaux décrits ci-dessus de manière générale. Les matériaux diélectrique et conducteur électriquement peuvent être également choisis parmi les matériaux cités ci-dessus.

De préférence, le réacteur hydrodynamique comporte des moyens de positionnement des premier et deuxième blocs dans le boîtier. Ces moyens peuvent comprendre des butées de positionnement longitudinal et/ou angulaire (autour de l'axe longitudinal), de préférence des moyens détrompeurs. Avantageusement, les ouvertures aval des premiers canaux peuvent être ainsi positionnées précisément et rapidement par rapport aux ouvertures amont des deuxièmes canaux qui débouchent dans la même chambre de compression.

En variante, ou en complément, le réacteur hydrodynamique peut comporter des moyens mécaniques pour augmenter la précision du contact électrique et la pression de contact entre ledit matériau conducteur des deuxièmes canaux et un constituant métallique du boîtier du réacteur hydrodynamique. De préférence, le contact électrique entre le matériau conducteur définissant les deuxièmes canaux métalliques et un constituant métallique du boîtier du réacteur hydrodynamique est assuré par serrage. De préférence le deuxième bloc est en appui sur un chapeau d'extrémité vissé sur le corps cylindrique du boîtier. De préférence, ce vissage permet de régler la pression de contact entre le deuxième bloc et le chapeau d'extrémité. De préférence encore, le deuxième bloc présente une surlongueur de manière que, lors du vissage du chapeau d'extrémité, une arête dudit deuxième bloc incise le chapeau d'extrémité.

De préférence, ledit contact électrique est sec, c'est-à-dire que la zone de contact électrique n'est pas en contact avec le liquide circulant dans le réacteur hydrodynamique. A cet effet, des joints d'étanchéité peuvent être disposés pour isoler cette zone de contact. Par exemple, des premier et second joints toriques peuvent être disposés entre le boîtier et le deuxième bloc, par exemple à proximité des faces amont et aval du deuxième bloc. Le deuxième bloc peut être en appui élastique sur le chapeau d'extrémité.

Dans un mode de réalisation, un deuxième bloc est disposé au niveau de la jonction entre le corps du boitier et un chapeau d'extrémité, de manière à chevaucher ladite jonction.

Le nombre de premiers et/ou deuxièmes blocs est de préférence supérieur à 1, supérieur à 2 ou supérieur à 3 et/ou inférieur à 10, inférieur à 7 ou inférieur à 5.

Dans un mode de réalisation, le réacteur hydrodynamique comporte successivement, depuis l'amont vers l'aval, un premier bloc, une chambre de compression, un deuxième bloc, une chambre de compression, un premier bloc, une chambre de compression, un deuxième bloc, une chambre de compression, un premier bloc et une chambre de compression.

Dans un mode de réalisation, le réacteur hydrodynamique comporte un deuxième bloc à chaque extrémité du boîtier, de préférence chacun en contact avec un chapeau d'extrémité respectif.

Dans un mode de réalisation, le réacteur hydrodynamique comporte un premier bloc et deux deuxièmes blocs, le premier bloc étant disposé entre les deux deuxièmes blocs.

Le réacteur hydrodynamique peut être par exemple un des réacteurs hydrodynamiques décrits dans le brevet EP-B2-680 457 ou dans WO 2011 033476, et notamment le réacteur hydrodynamique commercialisé sous la dénomination IONSCALE BUSTER® (ISB) par la société ISB WATER.

La figure 2 représente schématiquement un tel réacteur hydrodynamique 110.

Le réacteur hydrodynamique 110, d'axe longitudinal X, comporte un boîtier 111 pourvu d'une entrée 112 et d'une sortie 114.

Le boîtier 111 contient successivement, depuis l'amont vers l'aval, un premier bloc 116 en un matériau diélectrique et un deuxième bloc 118 en un matériau conducteur électriquement. De préférence, le boîtier 111 est en un matériau conducteur électriquement et est connecté électriquement avec l'anode sacrificielle en matériau conducteur qui constitue le deuxième bloc 118.

Les premier et deuxième blocs sont percés longitudinalement de premiers et deuxièmes canaux, référencés 120 et 122, respectivement.

Les premiers canaux débouchent en amont, vers l'entrée 112, dans une chambre amont 123, par des ouvertures « amont » $120_1$ et en aval, dans une première chambre de compression 124 cylindrique, par des ouvertures « aval » $120_2$.

Les deuxièmes canaux 122 débouchent en amont vers la première chambre de compression 124, par des ouvertures «amont» $122_1$, et vers l'aval, vers la sortie 114, dans une deuxième chambre de compression 125 par des ouvertures « aval » $122_2$.

Le diamètre de la chambre amont 123 et de la première chambre de compression 124 peut être de 270 mm. Tous les premiers canaux, au nombre de 9, peuvent présenter un diamètre intérieur de 6,3 mm.

Le rapport $S/\Sigma$ est donc d'environ 200,

- S désignant la section de la première chambre de compression 124 mesurée dans un plan transversal $P_S$ immédiatement en aval des ouvertures « aval » $120_2$ des premiers canaux;
- $\Sigma$ désignant la somme des sections transversales desdits premiers canaux mesurées dans un plan transversal $P_\Sigma$ immédiatement en amont de ces ouvertures « aval ».

La deuxième chambre de compression 125 et les ouvertures aval $122_2$ des deuxièmes canaux peuvent présenter une configuration similaire, voire identique, à celle de la chambre de compression 124 et des ouvertures aval $120_2$ des premiers canaux décrite ci-dessus.

Par ailleurs, tous les deuxièmes canaux, au nombre de 3, peuvent présenter un diamètre intérieur de 9 mm.

Le rapport S'/$\Sigma$',

- S' désignant la section de la première chambre de compression 124 mesurée dans un plan transversal $P_S$' immédiatement en amont des ouvertures « amont » $122_1$ des deuxièmes canaux,
- L' désignant la somme des sections transversales desdits deuxièmes canaux mesurées dans un plan transversal $P_\Sigma$' immédiatement en aval de ces ouvertures « amont »,

peut être supérieur à 2, supérieur à 5, supérieur à 10, supérieur à 20, supérieur à 50, supérieur à 100, voire supérieur à 200 et/ou inférieur à 1000, inférieur à 500, inférieur à 400, voire inférieur à 300.

Un rapport de S'/$\Sigma$' élevé permet avantageusement la création d'une contre pression significative à l'embouchure des deuxièmes canaux, très efficace pour supprimer les bulles de cavitation générées par les premiers canaux à l'entrée de la chambre de compression. La première chambre de compression 124 étant cylindrique, S'=S.

Pour calculer le rapport S'/$\Sigma$', on prend en considération tous les deuxièmes canaux concernés.

Si le réacteur hydrodynamique comporte plusieurs chambres de compression, toutes les chambres de compression du réacteur hydrodynamique peuvent présenter un rapport S'/$\Sigma$' sensiblement identique.

La chambre amont 123 et les ouvertures amont $120_1$ des premiers canaux peuvent présenter une configuration similaire, voire identique, à celle de la chambre de compression 124 et des ouvertures amont $122_1$ des deuxièmes canaux décrite ci-dessus. Tous les premiers et deuxièmes canaux s'étendent sensiblement selon l'axe X.

Séparateur de gaz

Les bulles formées dans le réacteur hydrodynamique, éventuellement divisées lors de la traversée de la chambre de compression, sont ensuite piégées dans le séparateur de gaz 30. Les conditions génératrices de cavitation disparaissent rapidement après que le liquide a pénétré dans la chambre de compression et les bulles se redissolvent donc dans le liquide. Le séparateur de gaz est donc disposé en aval du réacteur hydrodynamique, de préférence à une distance inférieure à 2 mètres, inférieure à 1 mètre, inférieure à 0,5 mètre, inférieure à 0,2 mètre, voire en contact avec le réacteur hydrodynamique.

Tout dispositif permettant d'extraire les bulles hors du liquide peut être utilisé :

- séparateur de gaz atmosphérique : Le séparateur de gaz atmosphérique permet une mise en contact du liquide avec de l'air, ce qui conduit notamment à l'élimination du $CO_2$ dissous, d'autant mieux que le liquide est finement divisé et l'air est rapidement renouvelé ;

- séparateur de gaz thermique : La pulvérisation du liquide dans un contre-courant de vapeur à des températures proches de 105 °C, permet l'élimination quasi totale des gaz dissous contenus dans le liquide ;
- dégazage par dépression ou tirage au vide : Le dégazage sous vide est utilisé à des températures en dessous du point d'ébullition atmosphérique. Le liquide est réduit en fines gouttelettes, qui favorisent le dégazage des gaz dissous.

Dans le séparateur de gaz, le liquide est de préférence maintenu sous pression. De préférence, dans le séparateur de gaz, le liquide est maintenu mobile. De préférence, dans le séparateur de gaz, le liquide ne présente pas une surface horizontale de contact avec un gaz, comme dans un bassin par exemple.

En particulier, le séparateur de gaz peut être un séparateur à coalescence :

Les séparateurs à coalescence peuvent être construits de manière simple et très compacte. Ils conviennent particulièrement bien au dégazage des circuits fermés en fonctionnement.

Ces séparateurs combinent divers principes de fonctionnement :

- ralentissement de la vitesse d'écoulement,
- mise en place de dispositifs pour optimiser le rôle des forces ascensionnelles (Archimède) et la séparation centrifuge,
- présence de corps étrangers adaptés pour favoriser la coalescence.

Au sein d'un séparateur à coalescence, les bulles de gaz accumulées fusionnent entre elles, selon le phénomène bien connu de la coalescence, formant ainsi des bulles de plus grandes tailles qui, sous la poussée d'Archimède, remontent jusqu'à une interface du liquide où elles peuvent être évacuées dudit liquide.

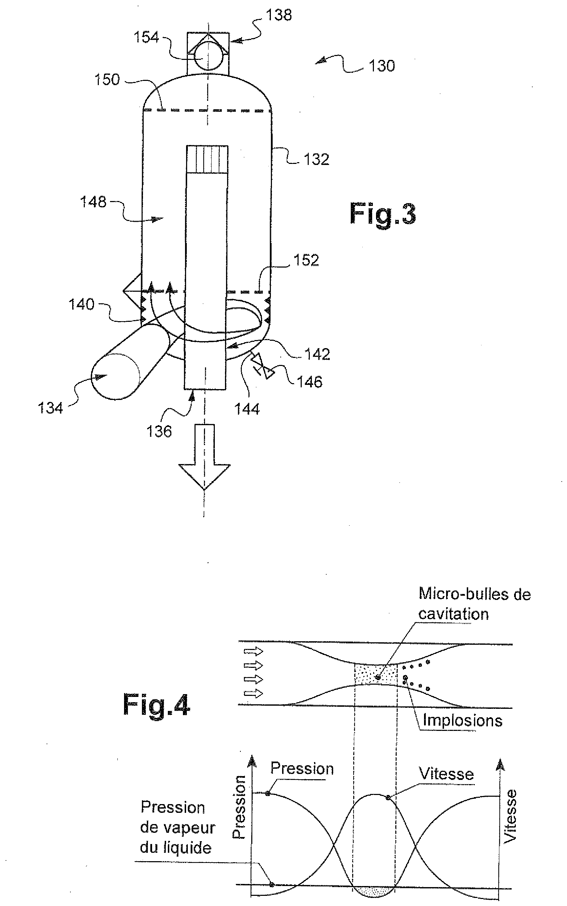

Dans un mode de réalisation représenté sur la figure 3, le séparateur à coalescence 130 comporte un réservoir 132, de préférence vertical, par exemple cylindrique, pourvu d'une entrée de liquide 134, une sortie de liquide 136 et une sortie de gaz 138.

L'entrée de liquide débouche de préférence sensiblement tangentiellement dans le réservoir. De préférence, le séparateur comporte des ailettes de guidage d'admission 140 disposées pour améliorer la centrifugation du liquide entrant.

La sortie de gaz, destinée à l'évacuation des gaz extraits, est de préférence disposée en partie supérieure du réservoir.

La sortie de liquide est de préférence disposée dans la partie inférieure du réservoir et se prolonge, à l'intérieur du réservoir, par un cylindre intérieur 142, s'étendant jusqu'à une hauteur, mesurée depuis le fond du réservoir, correspondant à environ les 2/3 de la hauteur du réservoir.

Le réservoir peut être encore pourvu d'un orifice de purge 144 doté d'une vanne d'isolation 146, placé dans la partie inférieure du réservoir et destiné à faciliter les opérations de vidange et de purge du réservoir.

Le réservoir est partiellement rempli d'un garnissage 148 destiné à favoriser le phénomène de coalescence des bulles de gaz. Le garnissage peut être disposé dans le volume défini par l'enveloppe du réservoir, le cylindre intérieur et des plaques support supérieure 150 et inférieure 152, de préférence perforées. De préférence les plaques support supérieure et inférieure sont situées, depuis la voûte et le fond du réservoir respectivement, à environ 1/4 de la hauteur du réservoir.

Le garnissage peut en particulier comporter des anneaux de RASCHIG, par exemple commercialisés par Pall Corporation (Pall-Rings).

Le réservoir présente de préférence un diamètre intérieur suffisamment grand pour diminuer sensiblement la vitesse de passage du liquide traité, de préférence de manière à assurer une vitesse inférieure à 3 m/s, inférieure à 2 m/s, voire inférieure à 1 m/s.

La taille des éléments de garnissage est adaptée au volume interne du séparateur et aux conditions de service dictées par la cible.

Les gaz ainsi captés peuvent être rejetés à l'extérieur du circuit, de préférence à l'aide d'un purgeur automatique 154.

Moyens de séparation de particules en suspension

Pour séparer les particules en suspension, on peut notamment mettre en oeuvre des moyens de décantation ou un filtre.

Le filtre 31, disposé en aval du réacteur hydrodynamique, permet d'extraire des particules en suspension. Le principe de la filtration est de dresser une barrière physique au passage des particules dont la taille est supérieure au seuil de filtration. La filtration améliore la qualité des liquides, et ainsi protège les équipements et limite les risques d'entartrage, d'embouage et de corrosion, ainsi que la bio-prolifération des micro-organismes comme les algues et les bactéries.

Le filtre 31 peut être notamment disposé entre le réacteur hydrodynamique et le séparateur de gaz ou en aval du séparateur de gaz, de préférence en aval du séparateur de gaz, de préférence en ligne de manière à traiter la totalité du débit (« in-line »). Une partie du débit peut être cependant détournée sur un circuit de traitement parallèle (« on-line »).

Le filtre peut être en particulier choisi dans le groupe formé par un filtre à brosse, un filtre à disques, un filtre à média granulaire, une membrane d'ultrafiltration, une membrane de nanofiltration, notamment seule ou en aval d'une membrane d'ultrafiltration, et une membrane par osmose inverse.

Un filtre à brosse permet d'éliminer mécaniquement les particules par passage du liquide à travers les fibres d'une brosse installée dans un carter. Un filtre à brosse est bien adapté à la filtration de particules dont la taille est supérieure à 100 μm. De préférence un filtre à brosse est utilisé pour des installations résidentiaires et tertiaires, EFG (eau froide générale), ECS (eau chaude sanitaire), chauffage et climatisation, ou pour des petits circuits de refroidissement.

Un filtre à disques permet d'éliminer mécaniquement les particules par passage du liquide à travers des empilages de disques rainurés, par exemple en polypropylène. Un filtre à disques est bien adapté à la filtration de particules dont la taille est comprise entre 20 μm et 200 μm. De préférence un filtre à disques est utilisé pour des installations d'eau potable, d'eau d'arrosage ou/et d'irrigation, d'eau de protection incendie, d'eau industrielle ou de refroidissement, ou pour de grosses installations résidentiaires et tertiaires, par exemple pour des hôpitaux ou des écoles.

Un filtre à média granulaire permet d'éliminer mécaniquement les particules par passage du liquide à travers un granulat disposé dans un carter sous pression. Les contaminants sont éliminés par rétention et/ou adsorption en fonction du média filtrant. Un filtre à média granulaire est bien adapté à la filtration d'eau de piscines et de bassins de baignade ou de rééducation, d'eau des tours et de circuits de réfrigération, ou d'eau où la contamination par des particules colloïdales est importante.

Une membrane d'ultrafiltration permet d'éliminer les particules en suspension, les bactéries et les virus ainsi que les plus grosses molécules organiques. Une membrane d'ultrafiltration est bien adaptée à la filtration de particules dont la taille est d'environ 0,01 micromètre. De préférence, on utilise un module de type PES - 7 bores - Intérieur / Extérieur. Une membrane d'ultrafiltration permet en particulier d'éliminer du $CaCO_3$ présent sous forme précoce, précipité de manière forcée dans le réacteur hydrodynamique, puis stabilisé dans le séparateur de gaz. Il en résulte avantageusement un abattement de TH dans le liquide. Une membrane d'ultrafiltration est bien adaptée à la filtration d'eau potable, d'eau d'installations résidentiaires et tertiaires, EFG, ECS, eau de chauffage et/ou de climatisation, ou de petits circuits de refroidissement, d'eau d'arrosage ou/et d'irrigation, d'eau de protection incendie, d'eau industrielle ou de refroidissement, d'eau de circuits primaires d'installations nucléaires, ou d'autres liquides aqueux contaminés par des polluants radioactifs, ou pour de grosses installations résidentiaires et tertiaires, par exemple pour des hôpitaux ou des écoles.

Fonctionnement

Le fonctionnement du dispositif est le suivant : Le liquide L est entrainé par la pompe 14 dans le circuit 12.

Le liquide L provenant de la cible 16 pénètre dans le réacteur hydrodynamique 110 dans lequel son écoulement est modifié afin de créer un écoulement turbulent susceptible de créer localement de la cavitation.

Plus précisément, le liquide à traiter pénètre dans le réacteur hydrodynamique 110 par l'entrée 112 (flèche F représentée sur la figure 2) et la chambre amont 123.

Le liquide transite alors par les premiers canaux 120 ménagés dans le premier bloc 116 en un matériau diélectrique.

L'entrée dans les premiers canaux s'accompagne d'une accélération brutale du liquide, d'une diminution de la pression, qui conduisent à l'apparition de cavitation. Les conditions opératoires (débit, pression) sont déterminées pour que la détente provoque de la cavitation. Avec un réacteur hydrodynamique IONSCALE BUSTER®, la vitesse du liquide en entrée du réacteur hydrodynamique (dans la chambre amont 123) est de préférence supérieure à 2 m/s et/ou inférieure à 15/ms, inférieure à 12 m/s, inférieure à 10 m/s, inférieure à 8 m/s, voire inférieure à 6 m/s, voire inférieure à 4 m/s, et la pression en entrée du réacteur hydrodynamique est de préférence supérieure à 1 bar et/ou inférieure à 20 bar, inférieure à 10 bar, voire inférieure à 5 bar.

Le livre "CAVITATION AND BUBBLE DYNAMICS" de Christopher Earls Brennen aux éditions Oxoford University Press, 1995 décrit les conditions permettant d'obtenir de la cavitation hydrodynamique.

La cavitation est un phénomène bien connu résultant d'une chute de pression locale dans un liquide du fait d'une modification géométrique de l'écoulement de ce liquide. Elle est utilisée en particulier pour obtenir des systèmes dispersés libres ou émulsés.

La cavitation conduit à la formation de bulles de cavitation, remplies de gaz, à l'intérieur de l'écoulement de liquide et/ou sur la couche en limite des parois du réacteur hydrodynamique dans lequel s'effectue l'écoulement, comme représenté sur la figure 4.

Si la pression diminue jusqu'à une valeur au-dessous de laquelle le liquide atteint un point d'ébullition, il se forme un grand nombre de bulles de cavitation.

C'est la loi de Henry qui permet de quantifier le phénomène physique de libération d'un gaz contenu dans un liquide, et qui démontre que plus la température augmente et/ou que la pression baisse, plus le liquide peut libérer de gaz dissouts. Cette libération de gaz dissouts se présente sous forme de bulles dont la taille peut varier de quelques dizaines de micromètres à quelques millimètres.

La capacité d'un réacteur hydrodynamique à créer des bulles par cavitation dépend de nombreux facteurs dont les principaux sont :

- la tension du ou des gaz dissous dans le liquide,
- la nature et les caractéristiques physico-chimiques du ou des gaz présents dans le liquide ;
- la température du liquide ;
- la pression du liquide,
- la géométrie du réacteur hydrodynamique,
- le débit ou la vitesse de passage du liquide.

La présence de déflecteurs permet avantageusement de générer des contractions locales très brutales de l'écoulement, favorables à la cavitation. En effet, lorsque l'écoulement de liquide dépasse le point de contraction généré par un déflecteur, l'écoulement de liquide entre dans une zone de pression réduite, ce qui favorise le phénomène de cavitation hydrodynamique.

L'intensité de la cavitation est reliée aux conditions de fonctionnement par le nombre de cavitation Cv.

Le nombre de cavitation Cv peut être exprimé de la manière suivante :

$$C_v = \frac{P_2 - P_v}{\frac{1}{2}\rho_l v_o^2}$$

où :

- $P_2$ est la pression en aval du réacteur hydrodynamique,
- Pv est la pression de vapeur du liquide L à la température de fonctionnement,
- Vo est la vitesse moyenne du liquide L dans le réacteur hydrodynamique,
- $\rho_L$ est la densité du liquide.

Le nombre de cavitation pour lequel le phénomène de cavitation commence à apparaître est Cv = 1.

Les effets du phénomène de cavitation seront d'autant plus importants que la valeur de Cv sera faible.

L'optimisation des phénomènes de cavitation dans un réacteur hydrodynamique repose sur l'application classique des modèles théoriques qui décrivent les écoulements des liquides dans les tuyères et les systèmes Venturi.

Les modèles théoriques les mieux adaptés sont les modèles qui concernent les écoulements diphasiques. Un écoulement à bulles à travers un Venturi peut être modélisé à partir des équations de conservation de la masse et de la quantité de mouvement des deux phases en présence, associées à l'équation dynamique de la bulle. La résolution numérique de ce système permet d'étudier l'influence de la variation du rayon du col du Venturi et l'effet de taux de vide initial sur l'évolution axiale du rayon de la bulle, de la pression du mélange gaz-liquide et de la vitesse de l'écoulement.

De préférence, le réacteur hydrodynamique est configuré pour générer des bulles présentant, pour plus de 50% en nombre, un diamètre compris entre 0,2 $\mu$m et 2 mm.

En pratique la cavitation prend naissance à partir de "noyaux" ou "germes". Ces points de départ de cavitation sont constitués par des occlusions gazeuses au sein du liquide, à savoir des microbulles libres, particules gazeuses accrochées à des impuretés solides en suspension, ou piégées dans les anfractuosités de parois solides, etc. Selon les conditions thermodynamiques de l'écoulement et la géométrie desdits premiers canaux, ces noyaux peuvent croître de manière plus ou moins explosive. En particulier, en présence d'une tension en un gaz dissous proche de la valeur de saturation dudit gaz, ce gaz va facilement se libérer sous forme de bulles de cavitation.

Avantageusement, les conditions mécaniques et thermodynamiques locales très intenses générées par la cavitation conduisent également à une destruction de certains micro-organismes, pathogènes ou non, qui pourraient être présents au sein du liquide.

Dans les premiers canaux, le liquide frotte sur le matériau diélectrique. Le frottement du liquide sur le matériau diélectrique provoque l'accumulation de charges électrostatiques à la surface dudit matériau diélectrique, générant ainsi un champ électrostatique local capable de favoriser les réactions suivantes :

- précipitation physico-chimique de certains ions tels que certains oxydes métalliques, les carbonates, les sulfates, ou les phosphates ;
- coagulation de certaines particules colloïdales.

Les particules colloïdales sont généralement trop fines pour être retenues par la majorité des systèmes de filtration et si on installe un filtre capable de les séparer, tel qu'un système d'ultrafiltration, par exemple, elles risquent de colmater rapidement les membranes d'ultrafiltration, et de faire apparaître des chutes de pression ou des réductions de débit prohibitives.

Grâce à la présence de l'effet électrostatique généré par le matériau diélectrique et à la coagulation des particules colloïdales qui en résulte, la taille des agglomérats de particules colloïdales peut atteindre une taille suffisante pour qu'ils soient retenus efficacement et économiquement dans un filtre.

Plus précisément, les particules colloïdales présentent souvent une dissymétrie de leurs charges électriques internes : le potentiel Zeta. Au voisinage du matériau diélectrique, on assiste à la suppression de cette barrière électrostatique qui empêche l'agrégation des particules colloïdales. En outre, la fréquence des collisions entre particules colloïdales est grandement augmentée par la turbulence du régime d'écoulement du liquide provoquée par la cavitation.

Sans être limité par cette théorie, l'inventeur considère que le potentiel de charge électrostatique généré sur la surface du matériau diélectrique provient d'une partie de l'énergie cinétique du courant de liquide qui est transformée en chaleur et en énergie électrique.

Le potentiel de charge électrostatique est fonction de l'intensité de la friction du liquide et de l'aire du matériau diélectrique sur laquelle le liquide circule.

L'accumulation de charges électrostatiques provoque un déséquilibre de potentiel entre la surface du matériau diélectrique et le liquide en circulation, et entre la surface du matériau diélectrique et les surfaces métalliques des tuyauteries du circuit dans lequel le liquide circule.

Les ions positifs ou négatifs ainsi présents dans le liquide vont se lier à l'interface liquide-solide par différents mécanismes tels que la force électrostatique, l'adsorption chimique, et la dissociation de groupements polaires, ou par réaction entre le liquide et le matériau diélectrique.

Lorsque les ions proviennent de la dissociation de sels dissouts (créant alors des charges positives et négatives en quantités égales), le phénomène d'électrisation ne se produit que parce qu'une espèce d'ions va être plus fortement liée au matériau diélectrique. Il s'établit alors une couche compacte appelée « couche de Helmholtz », du nom du physicien qui l'étudia en 1879. Gouy, un autre physicien, montra en 1910 que les ions de l'autre polarité s'organisent en une couche diffuse.

L'épaisseur de la couche diffuse, ou «couche de Gouy», dépend de la résistivité du liquide : elle est très faible pour un liquide très conducteur et elle croît avec la résistivité de ce dernier.

Lorsque le liquide est mis en mouvement, cette double couche va être séparée, la couche de Helmholtz restant liée à l'interface solide-liquide, et la couche de Gouy étant entraînée avec le liquide. L'accumulation des charges dans le liquide est gouvernée par la diffusion des ions vers l'interface et par la résistivité p du liquide.

Le fluide diphasique débouche alors dans la première chambre de compression 124. L'entrée dans la première chambre de compression 124 conduit à une diminution de la vitesse, à une augmentation brutale de la pression, et à une condensation à l'intérieur des bulles de cavitation, ce qui provoque l'implosion d'une majorité des bulles de cavitation, en générant des impulsions de pression dont l'amplitude peut être très élevée (voir figure 4). Ces implosions très brusques ont pour résultat la formation d'ondes de choc qui génèrent à leur tour des phénomènes physico-chimiques ou thermodynamiques et mécaniques, comme l'éclatement de toute matière se trouvant près des bulles qui implosent.

Ainsi, au cours de la dislocation des bulles de cavitation, de très hautes pressions et des températures locales très élevées sont atteintes : La température au sein des bulles peut ainsi atteindre des valeurs de l'ordre de 5000°C et la pression atteindre des valeurs de l'ordre de 500 kg/cm$^2$ (K.S. Suslick, Science, Vol. 247, 23 Mars 1990, p. 1439-1445).

Ces conditions de température et de pression activent, à l'intérieur d'une bulle ou dans le liquide au voisinage de ladite bulle, des réactions physico-chimiques et thermodynamiques, en particulier la précipitation des carbonates et la libération de $CO_2$.

Comme expliqué précédemment, la présence du matériau diélectrique favorise l'amplitude des phénomènes de précipitation du carbonate de calcium ($CaCO_3$) et l'agglomération d'autres composés colloïdaux, par un affaiblissement des barrières de potentiel ZETA. Avantageusement, cette précipitation permet de réduire les concentrations en additifs et de limiter la fréquence de renouvellement du liquide utile. Cette précipitation limite aussi l'amplitude des phénomènes de corrosion par la formation d'un film protecteur, dit de thillmann, et assure ainsi une certaine protection électro-galvanique de l'installation.

Par ailleurs, un processus d'émulsionnement, d'homogénéisation et de dispersion peut être obtenu grâce à l'énergie cinétique générée par les implosions des bulles de cavitation.

La forme des ouvertures « aval » des premiers canaux 120 débouchant dans la première chambre de compression 124 peut être adaptée afin de maximiser la turbulence et les modifications de pression, par exemple en y ménageant des obstacles ou des divergents. Les conditions hydrodynamiques régnant dans la première chambre de compression 124 contribuent également à la coagulation en assurant un brassage élevé du liquide. Il est donc particulièrement avantageux que la première chambre de compression soit en aval du matériau diélectrique, qui initie la coagulation.

La première chambre de compression 124 sépare les ouvertures « aval » des premiers canaux des ouvertures « amont » des deuxièmes canaux.

Le liquide sortant de la première chambre de compression 124 pénètre ainsi dans les deuxièmes canaux 122 du deuxième bloc 118. De préférence, les deuxièmes canaux ne sont cependant pas alignés axialement avec les premiers canaux afin de favoriser la turbulence et la précipitation ultérieure.

La pénétration du liquide dans les deuxièmes canaux 122 conduit à une accélération brutale de sa vitesse. La région de transition entre la chambre de compression 124 et les deuxièmes canaux 122 constitue donc une région d'accélération de l'écoulement, et d'apparition de cavitation.

Le liquide entre également en contact avec le matériau conducteur électriquement définissant les deuxièmes canaux, de préférence en zinc.

L'effet de «pile» type « Daniell » généré par le couple électro-galvanique Zn-Fe, provoque un transfert d'électrons capable d'assurer une protection anti-corrosion (protection cathodique). Le zinc, métal plus réducteur que le fer, ou encore que le cuivre, est en effet oxydé à la place des métaux moins réducteurs de l'installation.

L'effet de « pile » permet également une libération d'ions Zn+ au sein du liquide, du fait de la réaction électrolytique qui s'établit spontanément entre l'anode de zinc et les métaux moins réducteurs de l'installation, par exemple le boîtier du réacteur hydrodynamique lorsqu'il comporte du fer. Ces ions ainsi libérés dans le liquide peuvent servir de nucléide pour l'apparition et le développement des réactions de germination primaire hétérogène. En particulier, la présence de ces ions zinc permet une agglomération des ions calcium et magnésium contenus dans l'eau autour des ions de zinc. Les nucléides ainsi formés permettent une modification des conditions locales de cristallisation des carbonates de calcium et de magnésium, donnant lieu à un phénomène de nucléation secondaire extrêmement important et très rapide. Ce phénomène est observé en présence de cristaux de la substance à cristalliser (qualifiés d'amorce) et essentiellement en milieu agité. La vitesse de production de ces germes secondaires dépend de la vitesse d'agitation du milieu, de la quantité d'amorces, et de la sursaturation du liquide.

La géométrie du réacteur hydrodynamique, en particulier grâce au mélange drastique provoqué au sein du liquide, et la chambre de compression, par l'implosion des bulles de cavitation, coopèrent donc avec le matériau diélectrique et le matériau conducteur électriquement pour favoriser et accélérer la précipitation physico-chimique et la coagulation.

Cette coagulation est particulièrement utile pour extraire du liquide des métaux tels que de l'aluminium, du brome, du chrome ou du strontium, en particulier des métaux radioactifs. A la sortie du deuxième bloc 118, le liquide pénètre dans la deuxième chambre de compression 125, ce qui permet à nouveau de faire imploser la majorité des bulles de cavitation.

Le temps de rémanence des bulles résiduelles dépend du régime de l'écoulement et de la géométrie du réacteur hydrodynamique. Dans le tronçon de canalisation située en aval du réacteur hydrodynamique, il est typiquement inférieur à 20 secondes, inférieur à 5 secondes, voire inférieur à 2 secondes.

Le liquide L chargé de microbulles doit donc pénétrer rapidement dans le séparateur de gaz afin que les bulles puissent être piégées et rejetées hors du circuit de l'installation. Le séparateur de gaz est donc de préférence disposé à proximité du réacteur hydrodynamique. Le fait d'éliminer ainsi les gaz dissouts, et en particulier l'oxygène ($O_2$) dissout et le dioxyde de carbone ($CO_2$) résultant de la précipitation précoce du carbonate de calcium ($CaCO_3$), permet d'obtenir de meilleures conditions de fonctionnement du système :

- réduction des problèmes de bruit,
- réduction des problèmes de corrosion,
- élimination d'éventuelles zones de surchauffes localisées,
- élimination d'éventuelles dégradations mécaniques (pompes, valves, soupapes, etc.)

La tension en gaz du liquide sortant du séparateur de gaz est donc inférieure à celle dans le liquide entrant dans le réacteur hydrodynamique (sauf éventuellement en $CO_2$, ce dernier pouvant être produit par précipitation des carbonates dans le réacteur hydrodynamique). La capacité de nuisance des gaz dissous est donc réduite, sans qu'il soit nécessaire d'ajouter d'additifs.

Après être sorti du séparateur de gaz, le liquide traverse le filtre 31, ce qui permet de retenir, au moins en partie, les particules générés dans le réacteur hydrodynamique et, de préférence, d'autres polluants particulaires qui pourraient être néfastes pour l'installation. Le liquide poursuit ensuite son trajet vers la cible ou la pompe 14.

Le dispositif de traitement selon l'invention peut être utilisé dans toutes les applications dans lesquelles la présence d'un gaz dissous dans le liquide est susceptible d'être nuisible. En particulier, il peut être utilisé dans une tour de réfrigération ou dans une piscine. A la différence d'un circuit de chauffage, fermé, le liquide (liquide de refroidissement, eau de piscine) s'évapore, par exemple par mise à l'air libre, ce qui nécessite un appoint en liquide. Certains composés initialement présents dans le liquide d'appoint et certains additifs de traitement ne s'évaporent pas. Leur concentration a donc tendance à augmenter dans le liquide. Lorsque la concentration en additifs atteint un niveau critique, le liquide doit être renouvelé en partie (purges de déconcentration) ou en totalité (vidanges). Classiquement, dans une tour de réfrigération, l'eau doit être renouvelée lorsque la concentration en additifs a doublé ou triplé.

Le dispositif de traitement permet de limiter l'ajout d'additifs, qui sont généralement néfastes pour la santé et l'environnement, et de réduire la fréquence de renouvellement du liquide. Des essais ont par exemple montré que, grâce à un dispositif selon l'invention, la fréquence de renouvellement peut être divisée par quatre avec une tour de réfrigération de 600 KW. Le dispositif de traitement permet en outre de protéger le circuit de la tour de réfrigération contre les entartrages et la corrosion.

Dans une piscine, une injection de produits chlorés est nécessaire pour désinfecter suffisamment l'eau de baignade. Cette injection de chlore, associée à la pollution azotée apportée par les baigneurs, provoque la formation de chloramines qui sont néfastes pour la santé. Le dispositif de traitement permet de limiter, voire de supprimer l'ajout des produits chlorés. Dans une piscine de 800m³, des essais ont montré que le dispositif selon l'invention permet de réduire, de manière très économique, la production des chloramines à des valeurs inférieures aux normes préconisées.

La cible peut être également un appareil de filtration, par exemple un appareil de filtration par osmose inverse, notamment dans une installation de déminéralisation ou de potabilisation de l'eau par osmose inverse. Un tel appareil comporte typiquement une membrane traversée par l'eau à déminéraliser. Des phénomènes de précipitation, en amont de cette membrane, ont tendance à la colmater et il est donc classiquement nécessaire d'ajouter des produits chimiques antitartre ou séquestrants.

La mise en oeuvre d'un dispositif selon l'invention permet avantageusement de protéger l'appareil, en limitant, voire en supprimant, ces ajouts de séquestrants, souvent néfastes pour la santé et l'environnement.

Comme décrit ci-dessus, l'inventeur a constaté qu'une germination homogène et une précipitation précoce des cristaux de sels de certains ions présents dans le liquide à traiter, tels que les carbonates, sulfates, ou autres composés similaires, et cela sous des formes cristallographiques non adhérentes (telles que le CCA ou le CCM dans le cas des carbonates de calcium), ont lieu dans le réacteur hydrodynamique.

Le réacteur hydrodynamique permet aussi une agrégation ou agglomération, par les effets mécaniques intenses qui règnent au sein du réacteur hydrodynamique, de particules colloïdales, telles que les formes amorphes de la germination primaire des carbonates de calcium.

Les particules ainsi formées peuvent avantageusement présenter une taille suffisante pour rester à la surface externe de la membrane, et être entraînées dans le flux du concentrât. Elles peuvent ensuite être extraites du liquide, par exemple par filtration.

Un réacteur hydrodynamique placé en amont d'une membrane d'osmose inverse permet ainsi de la protéger.

Un dispositif de traitement selon l'invention peut être également utilisé pour traiter l'eau des circuits primaires des centrales nucléaires, ou plus généralement les liquides aqueux contaminés par des ions métalliques radioactifs. Un réacteur hydrodynamique selon l'invention peut en effet permettre de précipiter et de coaguler cette contamination, puis de l'extraire du liquide.

Comme cela apparaît clairement à présent, l'invention fournit une solution permettant de traiter un liquide en limitant le recours aux additifs, par exemple par injection d'acides ou de séquestrants et/ou en limitant son renouvellement dans l'installation.

Bien entendu, la présente invention n'est cependant pas limitée aux modes de réalisation décrits et représentés.

En particulier, pour le réacteur hydrodynamique décrit ci-dessus, le nombre ou la forme des premiers canaux peuvent être différents de ceux des deuxièmes canaux, le nombre de premiers blocs peut être identique ou différent du nombre de deuxièmes blocs, les premiers blocs ne sont pas nécessairement disposés en alternance avec les deuxièmes blocs le long de l'axe du réacteur hydrodynamique, et le nombre et la forme des chambres de compression peuvent être divers.

Le nombre de réacteur hydrodynamiques dans le circuit de traitement n'est pas limitatif. Le filtre peut également assurer une fonction de séparation de bulles, le séparateur et le filtre pouvant même être confondus dans un même appareil.

Les premiers canaux ne sont pas nécessairement en un matériau diélectrique et les deuxièmes canaux ne sont pas nécessairement en un matériau conducteur électriquement. Les premiers canaux peuvent être en amont ou en aval des deuxièmes canaux.

## Revendications

**1.** Dispositif de traitement d'un liquide contenant un gaz dissous, ledit dispositif comportant :

- un réacteur hydrodynamique (25) apte à générer, par cavitation, des bulles dudit gaz au sein dudit liquide,
- un séparateur de gaz (30) apte à extraire lesdites bulles dudit liquide et disposé en aval du réacteur hydrodynamique à une distance inférieure à 1 m du réacteur hydrodynamique, de manière que des bulles formées par cavitation dans le réacteur hydrodynamique, éventuellement divisées lors de la traversée d'une chambre de compression dudit réacteur hydrodynamique, soient piégées dans le séparateur de gaz.

**2.** Dispositif selon la revendication précédente, le réacteur hydrodynamique comportant une dite chambre de compression (124) configurée pour faire augmenter la pression dudit liquide lorsqu'il pénètre dans ladite chambre de compression de manière à faire imploser lesdites bulles.

**3.** Dispositif selon l'une quelconque des revendications précédentes, le réacteur hydrodynamique comportant des premiers canaux qui débouchent en aval dans une chambre de compression, et, de préférence, des deuxièmes canaux qui débouchent en amont dans ladite chambre de compression.

**4.** Dispositif selon la revendication précédente, dans lequel les premiers et deuxièmes canaux sont délimités intérieurement par un matériau diélectrique et par un matériau conducteur électriquement, respectivement.

**5.** Dispositif selon la revendication précédente, dans lequel le matériau diélectrique est du polytétrafluoroéthylène et/ou le matériau conducteur électriquement est du zinc.

**6.** Dispositif selon l'une quelconque des revendications précédentes, dans lequel le séparateur de gaz est conformé de manière que, dans ledit séparateur de gaz, le liquide est maintenu sous pression.

**7.** Installation comportant un circuit dans lequel est inséré une cible et un dispositif de traitement d'un liquide sortant de ladite cible (16), le dispositif de traitement étant conforme à l'une quelconque des revendications précédentes.

**8.** Installation selon la revendication précédente, comportant, en aval du dispositif de traitement, des moyens de séparation des particules en suspension, de préférence un filtre, de préférence choisi dans le groupe formé par un filtre à brosse, un filtre à disques, un filtre à média granulaire, une membrane d'ultrafiltration, une membrane de nanofiltration et une membrane par osmose inverse.

**9.** Installation selon l'une quelconque des deux revendications immédiatement précédentes, la cible étant choisie dans le groupe formé par un échangeur de chaleur, une tour de réfrigération, un bassin, en particulier à l'air libre, notamment une piscine publique ou privée, un circuit de refroidissement ou de climatisation, un circuit de chauffage, un circuit de filtration, un circuit de déminéralisation par osmose inverse, un circuit d'eau chaude sanitaire, ou un circuit de distribution d'eau potable.

10. Installation selon l'une quelconque des trois revendications immédiatement précédentes, le séparateur de gaz étant un piège à coalescence ou un filtre à brosse.

11. Installation selon l'une quelconque des quatre revendications immédiatement précédentes, dans laquelle un liquide circule dans le circuit, ce liquide contenant au moins un composé contenant un élément choisi dans le groupe formé par le chlore, l'aluminium, le brome, le chrome et le strontium, en particulier un métal radioactif.

12. Procédé de traitement d'un liquide contenant des gaz dissous, ledit procédé consistant à faire passer le liquide à travers un dispositif selon l'une quelconque des revendications 1 à 6 dans des conditions thermodynamiques adaptées pour que le réacteur hydrodynamique génère des bulles par cavitation, le séparateur de gaz étant disposé en aval du réacteur thermodynamique de manière que des bulles formées par cavitation dans le réacteur hydrodynamique éventuellement divisées lors de la traversée d'une chambre de compression dudit réacteur hydrodynamique, soient piégées dans le séparateur de gaz.

13. Procédé selon la revendication immédiatement précédente, lesdites bulles étant divisées par implosion avant d'être piégées.

14. Procédé selon l'une quelconque des deux revendications immédiatement précédentes, dans lequel le liquide circule en boucle fermée.


**Patentansprüche**

1. Vorrichtung zum Behandeln einer Flüssigkeit, die ein gelöstes Gas enthält, wobei die Vorrichtung aufweist:

   - einen hydrodynamischen Reaktor (25), der geeignet ist, durch Kavitation Blasen des Gases in der Flüssigkeit zu erzeugen,
   - einen Gasabscheider (30), der geeignet ist, die Blasen aus der Flüssigkeit zu extrahieren und der nachgelagert nach dem hydrodynamischen Reaktor in einem Abstand von weniger als 1 m vom hydrodynamischen Reaktor derart angeordnet ist, dass die Blasen, die sich durch Kavitation in dem hydrodynamischen Reaktor gebildet haben, die sich eventuell beim Durchqueren von einer Kompressionskammer des hydrodynamischen Reaktors geteilt haben, in dem Gasabscheider eingefangen werden.

2. Vorrichtung nach dem vorhergehenden Anspruch, wobei der hydrodynamische Reaktor eine Kompressionskammer (124) aufweist, die konfiguriert ist, um den Druck der Flüssigkeit derart zu erhöhen, wenn sie in die Kompressionskammer eindringt, um die Blasen implodieren zu lassen.

3. Vorrichtung nach einem der vorhergehenden Ansprüche, **dadurch gekennzeichnet, dass** der hydrodynamische Reaktor erste Kanäle, die nachgelagert in eine Kompressionskammer münden, und vorzugsweise zweite Kanäle aufweist, die vorgelagert in die Kompressionskammer münden.

4. Vorrichtung nach dem vorhergehenden Anspruch, wobei die ersten und zweiten Kanäle innen jeweils durch ein dielektrisches Material und durch ein elektrisch leitendes Material begrenzt sind.

5. Vorrichtung nach dem vorhergehenden Anspruch, wobei das dielektrische Material Polytetrafluorethylen ist und/oder das elektrisch leitfähige Material Zink ist.

6. Vorrichtung nach einem der vorhergehenden Ansprüche, wobei der Gasabscheider derart ausgebildet ist, dass in dem Gasabscheider die Flüssigkeit unter Druck gehalten wird.

7. Anlage, umfassend einen Kreislauf, in den ein Ziel und eine Vorrichtung zum Behandeln einer Flüssigkeit, die aus dem Ziel (16) austritt, eingefügt sind, wobei die Vorrichtung zum Behandeln einem der vorhergehenden Ansprüche entspricht.

8. Anlage nach dem vorhergehenden Anspruch, umfassend nachgelagert nach der Vorrichtung zum Behandeln Mittel zum Trennen der Partikel in Suspension, vorzugsweise einen Filter, vorzugsweise ausgewählt aus der Gruppe bestehend aus einem Bürstenfilter, einem Scheibenfilter und einem Filter mit granularem Filtermaterial, einer Ultrafiltrationsmembran, einer Nanofiltrationsmembran und einer Umkehrosmosemembran.

9. Anlage nach einem der zwei unmittelbar vorhergehenden Ansprüche, wobei das Ziel ausgewählt ist aus der Gruppe bestehend aus einem Wärmetauscher, einem Kühlturm, einem Becken, insbesondere im Freien, insbesondere einem öffentlichen oder privaten Schwimmbad, einem Kühl- oder Klimatisierungskreislauf, einem Heizkreislauf, einem Filtrationskreislauf, einem Demineralisierungskreislauf durch Umkehrosmose, einem Brauchwasserkreislauf oder einem Trinkwasserverteilungskreislauf.

10. Anlage nach einem der drei unmittelbar vorhergehenden Ansprüche, wobei der Gasabscheider ein Koaleszenzabscheider oder ein Bürstenfilter ist.

11. Anlage nach einem der vier unmittelbar vorhergehenden Ansprüche, wobei eine Flüssigkeit im Kreislauf zirkuliert, wobei diese Flüssigkeit mindestens eine Verbindung, die ein Element, das aus der Gruppe ausgewählt ist, die aus Chlor, Aluminium, Brom, Chrom und Strontium gebildet ist, insbesondere ein radioaktives Metall enthält.

12. Verfahren zum Behandeln einer Flüssigkeit, die ein gelöstes Gas enthält, wobei das Verfahren darin besteht, die Flüssigkeit durch eine Vorrichtung nach einem der Ansprüche 1 bis 6 unter geeigneten thermodynamischen Bedingungen zu leiten, damit der hydrodynamische Reaktor durch Kavitation Blasen erzeugt, wobei der Gasabscheider nachgelagert nach dem thermodynamischen Reaktor derart angeordnet ist, dass die Blasen, die sich durch Kavitation in dem hydrodynamischen Reaktor gebildet haben, die sich eventuell beim Durchqueren von einer Kompressionskammer des hydrodynamischen Reaktors geteilt haben, in dem Gasabscheider eingefangen werden.

13. Verfahren nach dem unmittelbar vorhergehenden Anspruch, wobei die Blasen durch Implosion geteilt werden, bevor sie eingefangen werden.

14. Verfahren nach einem der zwei unmittelbar vorhergehenden Ansprüche, wobei die Flüssigkeit in einer geschlossenen Schleife zirkuliert.

**Claims**

1. Device for treating a liquid containing a dissolved gas, said device comprising:

   - a hydrodynamic reactor (25) capable of generating, by cavitation, bubbles of said gas within said liquid,
   - a gas separator (30) capable of extracting said bubbles from said liquid and positioned downstream of the hydrodynamic reactor at a distance of less than 1 m from the hydrodynamic reactor, so that bubbles formed by cavitation in the hydrodynamic reactor, optionally divided when crossing a compression chamber of said hydrodynamic reactor, are trapped in the gas separator.

2. Device according to the preceding claim, the hydrodynamic reactor comprising a said compression chamber (124) configured in order to increase the pressure of said liquid when it penetrates said compression chamber so as to implode said bubbles.

3. Device according to either one of the preceding claims, the hydrodynamic reactor comprising first channels that open downstream into a compression chamber, and, preferably, second channels that open upstream into said compression chamber.

4. Device according to the preceding claim, wherein the first and second channels are delimited internally by a dielectric material and by an electrically conductive material, respectively.

5. Device according to the preceding claim, wherein the dielectric material is polytetrafluoroethylene and/or the electrically conductive material is zinc.

6. Device according to any one of the preceding claims, wherein the gas separator is adapted so that, in said gas separator, the liquid is maintained under pressure.

7. System comprising a circuit, inserted wherein are a target and a device for treating a liquid leaving said target (16), the treatment device being in accordance with any one of the preceding claims.

8. System according to the preceding claim, comprising, downstream of the treatment device, means for separating suspended particles, preferably a filter, preferably selected from the group formed by a brush filter, a disc filter, a granular media filter, an ultrafiltration membrane, a nanofiltration membrane and a reverse osmosis membrane.

9. System according to either one of the two immediately preceding claims, the target being selected from the group formed by a heat exchanger, a cooling tower, a pool, in particular an open-air pool, especially a public or private swimming pool, a cooling or air-conditioning circuit, a heating circuit, a filtration circuit, a reverse osmosis demineralization circuit, a domestic hot water circuit, or a drinking water distribution circuit.

10. System according to any one of the three immediately preceding claims, the gas separator being a coalescing filter or a brush filter.

11. System according to any one of the four immediately preceding claims, wherein a liquid circulates in the circuit, this liquid containing at least one compound containing an element selected from the group formed by chlorine, aluminum, bromine, chromium and strontium, in particular a radioactive metal.

12. Process for treating a liquid containing dissolved gases, said process consisting in passing the liquid through a device according to any one of Claims 1 to 6 under suitable thermodynamic conditions so that the hydrodynamic reactor generates bubbles by cavitation, the gas separator being positioned downstream of the thermodynamic reactor so that bubbles formed by cavitation in the hydrodynamic reactor, optionally divided when crossing a compression chamber of said hydrodynamic reactor, are trapped in the gas separator.

13. Process according to the immediately preceding claim, said bubbles being divided by implosion before being trapped.

14. Process according to either one of the two immediately preceding claims, wherein the liquid circulates in a closed loop.

**Fig.1**

**Fig.2**

Fig.3

Fig.4

Micro-bulles de cavitation

Implosions

Pression

Vitesse

Pression de vapeur du liquide

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2680457 B

- WO 2011033476 A

**Littérature non-brevet citée dans la description**

- **DE CHRISTOPHER EARLS BRENNEN.** CAVITATION AND BUBBLE DYNAMICS. Oxoford University Press, 1995

- *couche de Helmholtz*
- **K.S. SUSLICK.** *Science,* 23 Mars 1990, vol. 247, 1439-1445